Europäisches Patentamt

European Patent Office

Office européen des brevets

(19)

(11) Veröffentlichungsnummer: **0 133 884**
A2

(12)

# EUROPÄISCHE PATENTANMELDUNG

(21) Anmeldenummer: **84106850.5**

(22) Anmeldetag: **15.06.84**

(51) Int. Cl.⁴: **B 60 C 17/10**

(30) Priorität: **06.08.83 DE 3328476**

(43) Veröffentlichungstag der Anmeldung: **13.03.85**
**Patentblatt 85/11**

(84) Benannte Vertragsstaaten: **AT BE CH DE FR GB IT LI LU NL SE**

(71) Anmelder: **Continental Gummi-Werke Aktiengesellschaft, Königsworther Platz 1, D-3000 Hannover 1 (DE)**

(72) Erfinder: **Theusner, Martin, Dr. Dipl.-Chem., Franzburger Strasse 13, D-3007 Gehrden 1 (DE)**
Erfinder: **Heitmüller, Michael, Buchenplan 11, D-3000 Hannover 51 (DE)**

(54) **Fahrzeugrad.**

(57) Die Erfindung bezieht sich auf ein Fahrzeugrad, das für einen Notlauf geeignet ist. Um den Reifen bei einem Notlauf besser zu schützen, wird eine Gleitmittelschicht vorgeschlagen, die außer Silikonöl als weiterer Bestandteil Ruß enthält.

EP 0 133 884 A2

0133884

Continental Gummi-Werke Aktiengesellschaft, Hannover


Fahrzeugrad

Die Erfindung betrifft ein für einen Notlauf geeignetes luftbereiftes Fahrzeugrad mit einer starren Felge und mit einem Reifen, der im wesentlichen aus Gummi_oder gummiähnlichen Stoffen besteht, weiterhin mit zumindest einer Schicht eines Gleitmittels, das bei einem Notlauf wirksam ist und das als wesentlichen Bestandteil Silikonöl aufweist.

In der GB-PS 1 359 467 wird eine ganze Reihe von Stoffen angeführt, die für den Einsatz in einer Gleitmittelschicht geeignet erscheinen. Solche Gleitmittel sollen bekanntlich schlupfbedingte Schädigungen oder Zerstörungen des Reifens bei einem längeren Fahren ohne Luft verhindern, indem sie die Reibung zwischen der Reifeninnenwand und der Felge bei der Berührung in der Bodenaufstandsfläche verringern und damit einer übermäßigen Wärmeentwicklung entgegentreten.

An solche Gleitmittel für Fahrzeugräder sind unterschiedliche Anforderungen zu stellen. So sollten sie über einen möglichst großen Temperaturbereich eine hohe Viskosität aufweisen. Sie dürfen nicht viel wiegen, um im Rahmen eines energieoptimierten Fahrzeugrads nicht zu stark auf der Negativbilanz zu erscheinen. Weiterhin dürfen sie nicht zu fließfähig sein und müssen genügend stark an der Felge oder am Reifen haften, um eine Gleichverteilung des Gleitmittels über den Radumfang auch bei längeren Standzeiten und im Fahrbetrieb mit den dabei auftretenden hohen Fliehkräften zu gewährleisten.

Von den bekannten Gleitmitteln hat sich keines allgemein durchgesetzt, weil bisher nicht erreicht werden konnte, alle Anforderungen gleichzeitig ausreichend zu erfüllen.

Der Erfindung liegt deshalb die Aufgabe zugrunde, ein verbessertes Gleitmittel für Fahrzeugräder der eingangs genannten Art anzugeben.

Diese Aufgabe wird erfindungsgemäß dadurch gelöst, daß das Gleitmittel der Schicht 10 als weiteren Bestandteil Ruß enthält.

Durch die erfindungsgemäße Beimengung von Ruß, insbesondere von Thermalruß zum an sich schon über einen sehr großen Temperaturbereich hochviskosen Silikonöl werden die Viskositätseigenschaften des Gleitmittels nochmals erheblich verbessert. Besonders gute Ergebnisse werden erzielt, wenn man diesen beiden Komponenten des Gleitmittels als dritte Graphit mit seinen hervorragenden Schmiereigenschaften hinzufügt. Es hat sich gezeigt, daß auch bei einer 2-Komponentenmischung mit ca. 80 Gew.-% Silikonöl und ca. 20 Gew.-% Graphit ein verbessertes Gleitmittel erhalten wird.

Als Silikonöle kommen bevorzugt solche in Frage, die bei Raumtemperatur eine Viskosität von mehr als 200 000 $mm^2$/sec , insbesondere ca. 300 000 $mm^2$/sec aufweisen.

Es wurden besonders gute Erfolge erzielt mit einem nach dem Thermalverfahren hergestellten Ruß, der sich bereits durch ein graphitähnliches Aussehen auszeichnet und der zur Erreichung des Fixpunktes einen Leinölbedarf von nur 65-90 g pro 100 g Ruß aufweist.

Als Graphit hat sich ein Natur-Glanzpudergraphit mit 96 bis 97 % Kohlenstoff bewährt, der auch nach der Mahlung in der Kugelmühle seinetypische Flocken- bzw. Plättchenform behält.

Statt Graphit kann als dritte Komponente des Gleitmittels auch
Molybdänsulfid zum Einsatz kommen.

Gemäß einer bevorzugten Ausführungsform besteht das Gleitmittel
aus 40 bis 70 Gew.-% Silikonöl, 30 bis 15 Gew.-% Thermalruß
und 30 bis 15 Gew.-% Graphit.

Das Gleitmittel kann an der Innenwand des Reifens unterhalb vom
Laufstreifen oder auf radial außen befindlichen Stützflächen
der Felge oder sonstiger Stützkörper angebracht sein. Bei Bedarf
kann es selbstverständlich auch an anderen Stellen des Reifens
oder der Felge zum Einsatz kommen, auch an Felge und Reifen
gleichzeitig.

Zur leichteren Handhabung des Reifens und der Felge bei der Montage hat es sich bewährt, die Gleitmittelschicht mittels einer
dünnen, mit Durchbrüchen (Perforationen) versehenen Folie abzudecken, die z. B. aus Polyäthylen bestehen kann.

Das Gleitmittel kann besonders einfach durch Spritzen oder Streichen auf die Felge oder den Reifen aufgetragen werden, wenn es
in Form einer verdünnten Lösung vorliegt. Als Lösungsmittel kommen z. B. aliphatische, aromatische und chlorierte Kohlenwasserstoffe in Frage. Als besonders günstig hat es sich erwiesen, 100 g
Gleitmittel in ca. 250 ml Benzin mit einem Siedebereich von 30
bis 75°C zu lösen, weil dann die Lösung genügend schnell trocknet,
so daß Reifenteile nicht durch das Benzin gefährdet werden. Die
Lösung kann auch in der Reihenfolge hergestellt werden, daß zunächst das Silikonöl in Benzin gelöst wird und anschließend der
Ruß und das Graphit eingerührt werden.

Nachfolgend wird ein Ausführungsbeispiel der Erfindung anhand einer Zeichnung erläutert.

- 4 -

0133884

Es zeigt:

> Fig. 1 ein Fahrzeugrad mit einem Gleitmittelbelag (schematisch) auf der Reifeninnenwand unterhalb vom Laufstreifen in einem radialen Teilschnitt,

> Fig. 2 einen Ausschnitt des Rades gemäß Fig. 1 im Bereich der Felge mit einem Gleitmittelbelag auf der Felgenmantelfläche (schematisch).

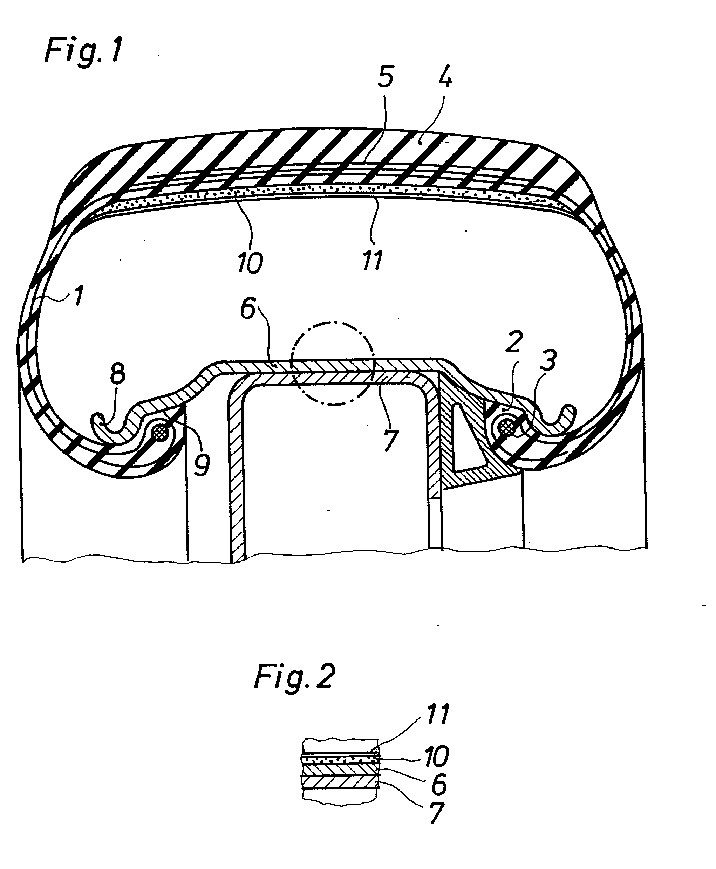

Der beim Rad gemäß Fig. 1 verwendete Fahrzeugluftreifen, der im wesentlichen aus Gummi oder gummiähnlichen Stoffen besteht, weist eine Radialkarkasse 1 auf, die in den Wülsten 2 durch Umschlingen der zugfesten Wulstkerne 3 verankert ist. Unterhalb des Laufstreifens 4 zwischen diesem und der Karkasse 1 befindet sich ein in Umfangsrichtung zugfester, aus zwei oder mehreren Cordgewebelagen bestehender Gürtel 5, der die Seitenstabilisierung des Reifenkörpers bewirkt.

Der aus Metall bestehende Felgenkranz 6 ist in bekannter Weise an einer Schüssel 7 angeschweißt. Dieser Felgenkranz 6 dient zur Halterung der Reifenwülste 2 und zur Abstützung des Reifens bei einem Notlauf, d. h. bei einem Fahrbetrieb nach einem Defekt, wenn die Luft aus dem Reifen entwichen ist. Der Felgenkranz 6 weist im Querschnitt gesehen seitlich außen je ein Felgenhorn 8 auf, das sich radial nach innen erstreckt. Am inneren Umfang des Felgenkranzes 6 liegt in axialer Richtung innen neben jedem Felgenhorn 8 eine Sitzfläche 9 für den Reifen.

Auf der radial äußeren Seite ist der Felgenkranz 6 in einem überaus breiten Mittenbereich mit einer nahezu zylinderförmigen Mantelfläche versehen, die in Querrichtung leicht gewölbt verlaufen kann, so daß im Defektfall die Zenitpartie des Reifens sich ohne wesentliche Formänderungen voll auf ihr abstützen kann. Da gleichzeitig der Reifen in seinen Seitenwandbereichen nach außen

0133884

ausbauchen kann, ist gewährleistet, daß im Defektfall keine Knickstellen am Reifen entstehen.

Zur Verhinderung einer übermäßigen Erwärmung aufgrund einer Reibung zwischen Reifen und Mantelfläche des Felgenkranzes 6 ist der Reifen an seiner Innenwand im Bereich unterhalb vom Laufstreifen mit einer Gleitmittelschicht 10 versehen. Die Gleitmittelschicht setzt sich aus 55 Gew.-% Silikonöl (Methylsilikonöl) mit einer kinematischen Viskosität von ca. 300 000 $mm^2$/sec , 22,5 Gew.-% Thermalruß mit einem Fixpunkt-Ölbedarf von 65 bis 90 g pro 100 g Ruß und 22,5 Gew.-% Graphit zusammen, wobei als Graphit ein Natur-Flockengraphit mit ca. 97 % Kohlenstoffgehalt und mit einer mittleren Teilchengröße von 8 $\mu$ eingesetzt wurde.

Zur Herstellung des Gleitmittels wurden die Komponenten zunächst in Benzin gelöst, so daß die Lösung auf die Reifeninnenwand gesprüht werden konnte.

Es hat sich gezeigt, daß für die Gleitmittelschicht Dicken von 1/10 bis 2/10 mm vollkommen ausreichen, so daß bezüglich der En ergiebilanz die Gewichtserhöhung am Reifen vernachlässigbar ist.

Fahrzeugräder der vorstehend beschriebenen Art, deren Reifen mit einem solchen Gleitmittelbelag 10 versehen waren, wurden an ein Fahrzeug montiert, mit dem bei nicht aufgepumpten Reifen zunächst eine Strecke von 50 km mit einer Geschwindigkeit von 40 km/h zurückgelegt wurde und danach 100 km mit einer Geschwindigkeit von 80 km/h gefahren wurden. Eine sich anschließende Untersuchung der Reifen ergab, daß sowohl die Reifen als auch die Gleitmittelschichten 10 voll funktionsfähig geblieben waren.

Um bei der Montage der Reifen eine bessere Handhabung zu erzielen, z. B. den Monteur vor einer Beschmutzung durch das Gleitmittel zu schützen, kann die Gleitmittelschicht 10 mittels einer dünnen, perforierten Polyäthylenfolie 11 abgedeckt sein, durch die das Gleitmittel bei einem Notlauf hindurchdringen kann.

Fig. 2 zeigt einen Ausschnitt des Rades nach Fig. 1 im Felgenbereich, wobei die Mantelfläche der Felge mit einem Gleitmittel der oben beschriebenen Art und gegebenenfalls mit einer Abdeckfolie 11 versehen ist. Das Gleitmittel kann sich bei dem beschriebenen Rad entweder nur am Reifen oder nur an der Felge oder an beiden befinden.

O133884

Ansprüche

1. Für einen Notlauf geeignetes luftbereiftes Fahrzeugrad mit einer starren Felge und mit einem Reifen, der im wesentlichen aus Gummi oder gummiähnlichen Stoffen besteht, weiterhin mit zumindest einer Schicht eines Gleitmittels, das bei einem Notlauf wirksam ist und das als wesentlichen Bestandteil Silikonöl aufweist, dadurch gekennzeichnet, daß das Gleitmittel der Schicht (10) als weiteren Bestandteil Ruß enthält.

2. Rad nach Anspruch 1, dadurch gekennzeichnet, daß die Viskosität des Silikonöls im Gleitmittel mehr als 200 000 $mm^2$/sec beträgt.

3. Rad nach Anspruch 1 oder 2, dadurch gekennzeichnet, daß das Gleitmittel als dritten Bestandteil Graphit enthält.

4. Rad nach Anspruch 1 oder 2, dadurch gekennzeichnet, daß das Gleitmittel als weiteren Bestandteil Molybdänsulfid enthält.

5. Rad nach Anspruch 1, dadurch gekennzeichnet, daß das Gleitmittel aus 30 bis 70 Gew.-% Silikonöl und 70 bis 30 Gew.-% Thermalruß besteht.

6. Rad nach den Ansprüchen 1 und 3, dadurch gekennzeichent, daß das Gleitmittel aus 40 bis 70 Gew.-% Silikonöl, 30 bis 15 Gew.-% Thermalruß und 30-15 Gew.-% Graphit besteht.

7. Rad nach Anspruch 1, dadurch gekennzeichnet, daß sich die Gleitmittelschicht (10) am Reifen und/oder an der Felge befindet.

8. Rad nach Anspruch 7, dadurch gekennzeichnet, daß die Gleitmittelschicht (10) durch eine Folie (11) abgedeckt ist.

9. Verfahren zur Herstellung eines Rades nach Anspruch 1, dadurch gekennzeichnet, daß die Gleitmittelschicht (10) als Lösung auf den Reifen und/oder die Felge aufgebracht wird.

10. Für einen Notlauf geeignetes luftbereiftes Fahrzeugrad mit einer starren Felge und mit einem Reifen, der im wesentlichen aus Gummi oder gummiähnlichen Stoffen besteht, weiterhin mit zumindest einer Schicht eines Gleitmittels, das bei einem Notlauf wirksam ist und das als wesentlichen Bestandteil Silikonöl aufweist, dadurch gekennzeichnet, daß das Gleitmittel der Schicht (10) als weiteren Bestandteil Graphit enthält.

11. Rad nach Anspruch 10, dadurch gekennzeichnet, daß das Gleitmittel aus 70 bis 85 Gew.-% Silikonöl und 30 bis 15 Gew.-% Graphit besteht.

Hannover, den 1. August 1983
Akte: 83-37 P/Sr          Sr/Bu

0133884

Fig.1

Fig.2